# EUROPEAN PATENT APPLICATION

(11) **EP 1 432 258 A1**
(43) Date of publication of application: **23.06.2004**
(21) Application number: 02293149.7
(22) Date of filing: 18.12.2002
(51) Int. Cl.: H04Q 7/34, H04B 17/00, H04L 12/26

(54) **Device for an accurate testing of one or several transceivers**

(71) Applicant: Mitsubishi Electric Information Technology Centre Europe B.V., 1119 NS Schiphol Rijk (NL); MITSUBISHI DENKI KABUSHIKI KAISHA, Tokyo 100-8310 (JP)
(72) Inventor: Voyer, Nicolas, c/o Mitsubishi Electric ITE, 35700 Rennes (FR)
(74) Representative: Maillet, Alain

(57) **Abstract**

The invention relates to a device SD for simulating operating conditions of at least one specific transceiver STRj (for j=1 to P) intended to communicate with at least two other transceivers EMi (for I=1 to N).

The device according to the invention includes multiplexing means MXME, MXMS for gathering and multiplexing digital signals representative of the stimuli to be exchanged between the transceivers, and for transmitting said signals in series on at least one multiplexed bus located between said transceivers.

The multiplexing means MXME, MXMS prevent signals, which are representative of stimuli generated by the various transceivers involved in a simulation and may have identical or close frequency values, to be simultaneously sent on parallel wires, and thus preclude any possibility for such signals to interact with each other.

## Description

The present invention relates to a device for simulating operating conditions of at least one specific transceiver intended to communicate with at least two other transceivers, which device includes signal transmitting and receiving means for emulating digital signals representative of stimuli intended to be exchanged between said specific transceiver and said other transceivers.

Such devices are currently used for testing mobile transceivers or radio base stations intended to exchange signals with multiple other mobile transceivers in a cellular telecommunication system of the second generation, often reffered to as a 2G system, as for example a GSM system. A known test device of a first type, manufactured by ACTERNA ENINGEN GMBH, enables to subject a specific transceiver, for example a radio base station, to a load generated by up to fourty-eight other mobile transceivers, further referred to hereinafter as load transceivers. The load transceivers are arranged in racks and coupled together by means of wires and/or coupling devices so that a combination of signals produced by said transceivers may be performed and sent to the specific transceiver to be tested.

Such a combination is useful in that it reproduces operating conditions of the radio base station to be tested. A properly tuned combination will be representative of a sum of contributions to a composite signal to be transmitted or received by the radio base station, which contributions are generated by the load transceivers and may affect contents of said composite signal if the radio base station were operating in a cell of an actually deployed telecommunication system, which cell would also include the load transceivers.

This known test device of the first type, though being well-suited for simulating a load produced in a cell of a 2G telecommunication system, is, however, ill-suited for simulating a load produced in a cell of a third generation telecommunication system, often reffered to as a 3G system, as for example a UMTS system. Indeed, 3G systems do not perform a frequency planning as is done in 2G systems, where to two different mobile transceivers located in a same geographical area are allocated two different communication frequencies, so as to minimize interference between said users. In 3G systems, no such frequency planning is performed, so that the wires connected to the load transceivers will carry signals whose frequencies may be close to each other. Interaction between these wires will thus occur, by virtue of various phenomena like for example mutual induction between said wires, to an extent which is highly difficult to control dynamically since said extent will depend on the cross-section and length of each wire and its position and configuration with respect to the other wires, etc. The effects of such interactions will disturb the tunable combination performed in order to model the amount of interference affecting the signals received or transmitted by the radio base station, so that the operating conditions of said radio base station will not be accurately reproduced, which will alter the significance of the test results.

Furthermore, it should be noted that, while a radio base station included in a 2G system is intended to simultaneously communicate with hundreds of mobile transceivers located in associated cells, which situation may be reproduced by using several test devices such as the one described above, a radio base station included in a 3G system is intended to simultaneously communicate with thousands of mobile transceivers. Several tens of such known test devices of the first type would thus be needed for reproducing such a situation, which is not realistic given the cost of a single such device and the space needed for its installation.

A known test device of a second type is produced by SPIRENT COMMUNICATIONS and is specifically intended for testing mobile transceivers. This known test device of the second type comprises signal transmitting and receiving means for emulating the operation of a radio base station managed by an associated radio network controller and for generating digital signals representative of stimuli to be exchanged between such a radio base station and a mobile transceiver to be tested. This known test device of the second type is thus not originally adapted for testing a specific transceiver constituted by another radio base station.

This test device of the second type comprises an RF-channel simulator for modelling adverse effects a radiofrequency channel, through which the emulated radio base station and the mobile transceiver to be tested are to communicate with each other, will produce on stimuli transmitted through said channel, and for emulating said adverse effects by means of a tunable processing of the digital signals passing through the RF-channel simulator.

It should be noted here that an accurate test of a mobile transceiver included in a 3G system typically involves not only one, but at least twenty radio base stations which are likely to interfere with each other when said 3G system is actually deployed. A simulation of such a configuration would thus require a use of at least twenty corresponding test devices such as the known test device of the second type described above, which is unrealistic given the cost of a single such device and the space needed for its installation. Moreover, signals delivered by the various RF-channel simulators by means of output wires would then have to be combined together, which would produce the same interaction problems as those raised in the case of the known test device of the first type described above.

Besides, since the signal transmitting and receiving means included in each second test device emulate a radio base station driven by a radio network controller, a parallel association of multiple such test devices would emulate a telecommunication system including multiple radio network controllers, each managing a single radio base station, whereas a real cellular telecommunication system usually includes a single radio network controller intended to simultaneously manage all radio base stations. A use of multiple known test devices of the second type such as the one described above would thus still not enable an adequate simulation of a real 3G system.

Furthermore, the signal transmitting and receiving means included in this test device of the second type generate predefined suites of stimuli, in answer to which the transceiver to be tested is expected to produce other predefined suites of stimuli. Such suites are disclosed in the 3GPP standard specification, but these disclosed suites are not sufficient by themselves for performing an accurate testing of a given transceiver. Additional suites, for example TTCN (standing for Tree and Tabular Combined Notation) suites, must thus be defined according to constraints set forth in standard specifications, so that their generation is difficult and involve numerous and costly man-hours.

One of the goals of the invention is to provide a simulating device able to simulate operating conditions of any kind of transceiver, be it a radio base station or a mobile transceiver intended to be included in a telecommunication system, and to perform such a simulation dynamically, i.e. without requiring prior generation of test suites.

Another goal of the invention is to provide a simulating device able to simulate operating conditions of transceivers intended to be included in a telecommunication system of the third generation, in which no frequency planning is performed.

Another goal of the invention is to provide a simulating device able to simulate predefined operating conditions of a given mobile transceiver, which predefined operating conditions may be reproduced any number of times.

To this end, a device for simulating operating conditions of a transceiver as defined in the opening paragraph further includes, according to the invention, multiplexing means for gathering and multiplexing digital signals representative of the stimuli to be exchanged between the transceivers, and for transmitting said signals in series on at least one multiplexed bus located between said transceivers.

The multiplexing means prevent signals, which are representative of stimuli generated by the various transceivers involved in a simulation and may have identical or close frequency values, to be simultaneously sent on parallel wires, and thus preclude any possibility for such signals to interact with each other, since, according to the invention, such signals will be sent in series on the multiplexed bus.

According to an embodiment of the invention, a device as described above further includes signal combination means for combining together various digital signals intended to be carried by the multiplexed bus.

The signal combination means enable to synthesize contributions of all transceivers involved in a simulation in interference patterns which will represent the amount of interference which said transceivers would create in an actually deployed telecommunication system, which interference would then adversely affect communications exchanged between the specific transceiver and the other transceivers. This will in turn enable to simulate field-tests which would be carried out under predefined operating conditions by said specific transceiver, which predefined operating conditions may be reproduced any number of times, whereas the operating conditions of a mobile transceiver performing a real field-test in an actually deployed telecommunication system may never be identically reproduced, since for example a given set of weather conditions affecting radio wave propagation may only happen once.

An ability to reproduce such a virtual field-test is advantageous in that, once a descrepancy in the operation of a simulated telecommunication system will have been observed in the course of such a test, and will have led to corrective measures in the operation of one or several of the transceivers involved in the simulation, a very same virtual field-test may be run again in order to assess the effects produced by said corrective measures

According to a variant of this embodiment of the invention, the combination means include:
. first combination means for combining together signals intended to be provided to said multiplexed bus, and
. second combination means for combining together signals intended to be delivered by said multiplexed bus.

According to another variant of this embodiment of the invention, distribution means are associated to said combination means, said distribution means being intended to provide a reverse path to the combination means.

According to another embodiment of the invention, a device as described above further includes channel processing means for modelling adverse effects each channel through which a given transceiver communicates with said specific transceiver will produce on stimuli transmitted through said channel, and for emulating said adverse effects by means of a tunable processing of digital signals intended to be carried by the multiplexed bus.

The channel processing means will enable to realistically simulate comunications exchanged between transceivers involved in the simulation, by allowing to model and reproduce alterations of said communications due to the propagation medium signals carrying said communications are to be sent through.

According to yet another embodiment of the invention, a device as described above further includes frequency conversion means for upshifting or downshifting at least one frequency of at least one digital signal intended to be carried by the multiplexed bus.

Such an embodiment will enable to simplify simulation of telecommunication systems in which the specific transceiver is intended to communicate with the multiple other transceivers by means of radiofrequency signals, since said signals may then be generated and processed in baseband frequency, which is typically in a far lower range than the radiofrequency range, the frequency conversion being executed after all other processing of said signals will have been performed.

According to yet another embodiment of the invention, the signal transmitting and receiving means include multiple modems, each modem being intended to emulate a given other transceiver by transmitting and receiving digital signals representative of stimuli intended to be exchanged between said given transceiver and the specific transceiver.

Such an embodiment will enable to dispense with the need of including multiple real transceivers in a device as described above for implementing the signal transmitting and receiving means, which enables in turn to reduce the bulk and the cost of such a device, and essentially suppresses interference problems which would otherwise arise due to necessary couplings of such real transceivers by means of wires or coupling devices.

According to a preferred embodiment of the invention, a simulation device as described hereinbefore includes a single multiplexed bus intended to communicate with the signal tranmitting and receiving means, said multiplexed bus also being intended to communicate with multiple channel emulating modules, each channel emulating module including signal combination means, channel processing means, frequency conversion means and tunable attenuation means, said means being able to exchange signals within said channel emulating module.

More generally, the invention also relates to a method for simulating operating conditions of at least one specific transceiver intended to communicate with at least two other transceivers, which method includes signal transmitting and receiving steps for emulating digital signals representative of stimuli intended to be exchanged between said specific transceiver and said other transceivers, which method further includes a multiplexing step for gathering and multiplexing digital signals representative of the stimuli to be exchanged between the transceivers, and for transmitting said signals in series on at least one multiplexed bus located between said transceivers.

The characteristics of the invention mentioned above, as well as others, will emerge more clearly from a reading of the following description given in relation to the accompanying figures, amongst which:
Fig.1 is a functionnal diagram which depicts a simulation device according to the invention,
Fig.2 is a functionnal diagram which depicts a multiplex module included in this simulation device,
Fig.3 is a functionnal diagram which depicts combination and distribution means included in this simulation device, and
Fig.4 is a functionnal diagram which depicts a simulation device according to a preferred embodiment of the invention.

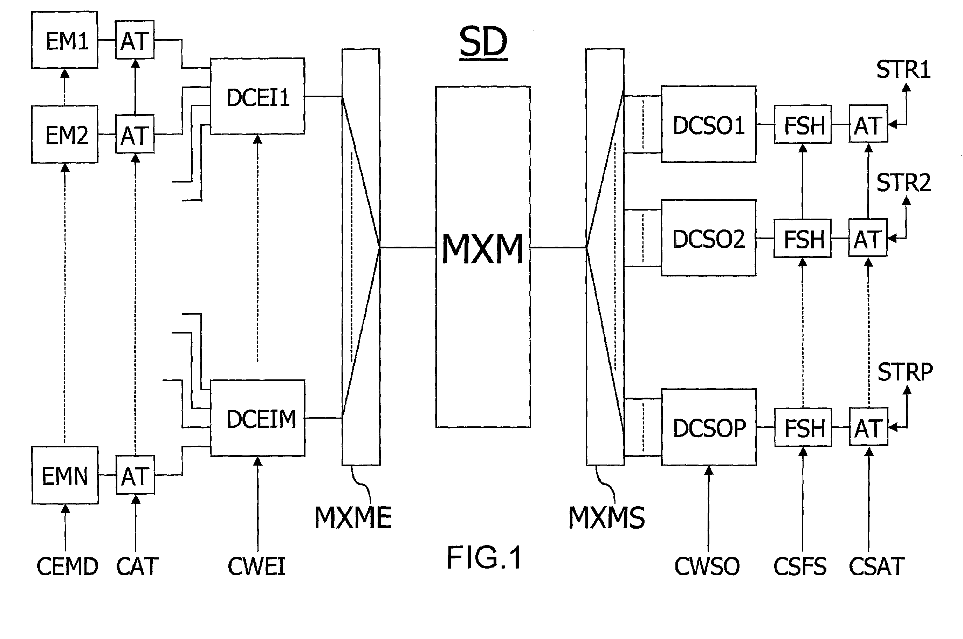

Fig.1 diagrammatically shows a simulation device SD acccording to the invention, which is intended to simulate operating conditions of P specific transceivers STR1...STRP intended to communicate with N other transceivers, which simulation device SD includes signal transmitting and receiving means for emulating digital signals representative of stimuli intended to be exchanged between said specific transceivers STRj (for j=1 to P) and said other transceivers.

In this embodiment of the invention, the signal transmitting and receiving means include multiple modems EMi (for i=1 to N), each modem EMi being intended to emulate a given other transceiver by transmitting and receiving digital signals representative of stimuli intended to be exchanged between said given transceiver and the specific transceivers STRj (for j=1 to P). The multiple modems EMi are driven by a programmable set of control signals CEMD so as to deliver signals such as those real transceivers would generate under corresponding operating conditions.

The simulation device SD includes multiplexing means MXME for gathering and multiplexing signals provided by said modems EMi (for i=1 to N), and for transmitting said signals in series on at least one multiplexed bus included in a multiplex module MXM located between said modems EMi (for i=1 to N) and said specific transceivers to be tested STRj (for j=1 to P).

The multiplexing means MXME prevent signals delivered by said modems EMi (for i=1 to N) to be simultaneously sent on parallel wires, and thus preclude any possibility for such signals to interact with each other.

In this particular embodiment of the invention, the simulation device SD has been provided with first optional combination means DCEI1...DCEIM for gathering together clusters of signals generated by modems EMi (for i=1 to N) in order to reduce a total number of signals intended to be simultaneously carried by the multiplexed bus included in the multiplex module MXM. These first optional combination means DCEI1...DCEIM deliver composite signals, each of which is a combination of signals delivered by a corresponding sub-group of modems. The use of such optional combination means thus enables to reduce the load to which the multiplexed bus included in the multiplex module MXM is subjected.

A programmable set of control signals CWEI defines parameters to be used by the first optional combination means DCEI1...DCEIM for performing the above-described combination. Such parameters may be, for example, coefficients of a linear combination of the signals to be combined.

In this particular embodiment of the invention, the simulation device SD has been provided with second optional combination means DCSO1...DCSOP for gathering together clusters of signals delivered by at least one multiplexed bus included in the multiplex module MXM through demultiplexing means MXMS. These second optional combination means DCSO1...DCSOP will thus deliver output signals towards the specific transceivers to be tested STRj (for j=1 to P), each output signal being a composite signal representative of contributions from numerous signals delivered by the signal transmitting and receiving means including the modems EMi (for i=1 to N).

As will be explained hereinafter, the multiplex module includes channel processing means. In the example depicted here, the channel processing performed by these channel processing means will be executed in baseband frequency, though the transceivers involved are to communicate by means of radiofrequency channels. Such a choice is advantageous in that signal processing at baseband frequencies is far easier to perform than signal processing at radio frequencies. Frequency conversion means FSH are thus provided for upshifting, on the one hand, the frequencies of the output signals of the second optional combination means DCSO1...DCSOP from the baseband to the radiofrequency range, and for downshifting, on the other hand, the frequencies of signals delivered by the various specific transceivers STR1...STRP from the radiofrequency to the baseband range. These frequency conversion means are driven by a programmable set of control signals CSFS.

Tunable attenuation means AT are also provided for tuning amplitude values of signals intended to be received by the various specific transceivers STR1...STRP, on the one hand, and amplitude values of signals intended to be received by the modems EM1...EMN, on the other hand, in order to prevent possible saturation of front ends of the related specific transceivers or modems. These tunable attenuation means are driven, on the one hand, by a programmable set of control signals CSAT, and, on the other hand, by another programmable set of control signals CAT.

The above explanations relate to a processing performed by the simulation device SD of signals sent by the modems EMi (for i=1 to N) towards the specific transceivers to be tested STRj (for j=1 to P).

It should be understood that signals sent by said specific transceivers to be tested STRj (for j=1 to P) towards said modems EMi (for i=1 to N) will follow a similar path in the reverse direction, where the demultiplexing means MXMS will play the part of the multiplexing means MXME and *vice versa*.

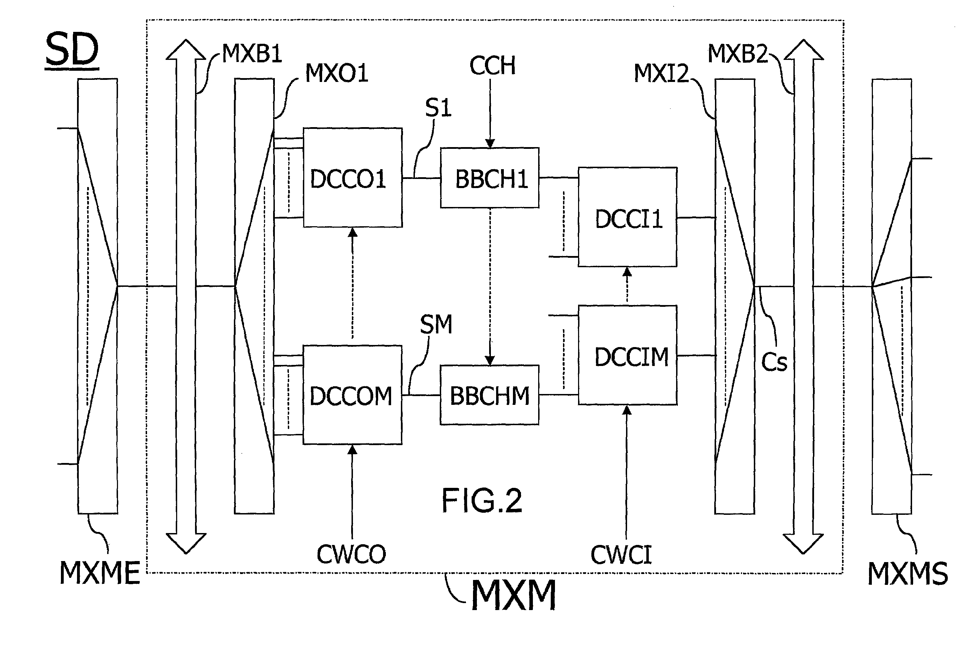

Fig.2 shows a multiplex module MXM included in the above-described simulation device SD. This multiplex module MXM includes a first multiplexed bus MXB1, connected to the above-described multiplexing means MXME and to demultiplexing means MXO1. This multiplex module MXM further includes channel processing means BBCH1...BBCHM for modelling adverse effects produced by a communication channel on stimuli transmitted through said channel, and for emulating said adverse effects by means of a tunable processing of digital signals S1... SM intended to be carried by the first multiplexed bus MXB1. Modified signals S1...SM delivered by said channel processing means BBCH1...BBCHM will be arranged in series on a second multiplexed bus MXB2 *via* multiplexing means MXI2, which may in some embodiments be constituded by an extension of the first multiplexed bus MXB1.

The multiplex module MXM further includes first combination means DCCI1...DCCIM for gathering together clusters of signals generated by the channel processing means BBCH1...BBCHM in order to reduce a total number of signals intended to be simultaneously carried by the second multiplexed bus MXB2. These first combination means DCCI1...DCCIM deliver composite signals, each of which is a combination of signals delivered by the channel processing means BBCH1...BBCHM. The use of such optional combination means thus enables to reduce the load to which the second multiplexed bus MXB2 is subjected. The multiplex module MXM further includes second optional combination means DCCO1...DCCOM for gathering together clusters of signals delivered by the first multiplexed bus MXB1 through the demultiplexing means MXO1. These second combination means DCCO1...DCCOM will thus deliver output signals S1...SM towards the channel processing means BBCH1...BBCHM, each output signal Sk (for k=1 to M) being a composite signal representative of contributions from numerous signals delivered by the first optional combination means described above, and thus from numerous signals delivered by the signal transmitting and receiving means.

The multiplexing means MXI2 will output a composite signal Cs on the second multiplexed bus MXB2, which composite signal Cs may then be splitted, by demultiplexing means MXMS, into several components each of which intended for a given specific transceiver to be tested.

The above explanations relate to a processing performed by the simulation device SD of signals sent by signal transmitting and receiving means towards the specific transceivers to be tested.

It should be understood that signals sent by said specific transceivers to be tested towards said signal transmitting and receiving means will follow a similar path in the reverse direction, where the demultiplexing means MXMS, MXO1 will play the part of the multiplexing means MXME, MXI2 and *vice versa*, and where the combination means DCCI1...DCCIM will be used for dispatching towards the various channel processing means BBCH1...BBCHM the relevant contributions of said specific transceivers to be tested STRj to the signals exchanged through said channels, after a frequency shift from radio to baseband frequency ranges will have been performed by above-described frequency conversion means.

The channel processing means BBCH1...BBCHM are driven by a programmable set of control signals CCH, which will define the processing to be performed by said channel processing means. This processing will preferrably take into account phenomena known to occur in radiofrequency channels, like for example signal power attenuation due to coupling loss, fast fading effect and shadowing effect.

The various combination means (DCEI1...DCEIM), (DCSO1...DCSOP), (DCCI1...DCECM), (DCCO1...DCCOM) thus enable to synthesize all contributions of the transceivers involved in a simulation to an interference pattern which could adversely affect communications exchanged between said transceivers.

Programmable sets of control signals CWEI, CWSO, CWCI and CWCO define parameters to be used by these combination means for performing the above-described combination. Such parameters may, for example, constitute coefficients of a linear combination of the signals provided to these combination means.

All processing performed within the simulation device SD is thus defined by programmable control words, which enables to reproduce the simulated operating conditions any number of times and to perform such a simulation dynamically, i.e. without requiring prior generation of test suites.

Furthermore, the above description of the operation of the simulating device SD is valid regardless of the type of the specific transceivers STRj (for j=1 to P) to be tested, which specific transceivers may be constituted by radio base stations or mobile transceivers intended to be included in a telecommunication system.

Likewise, the modems EM1...EMN included in this example in the signal transmitting and receiving means may emulate individual mobile transceivers whose behaviour can be modelled by a dynamic scenario generator, not shown in this drawing, and may also emulate radio base stations driven by a radio network controller, not shown in this drawing, either.

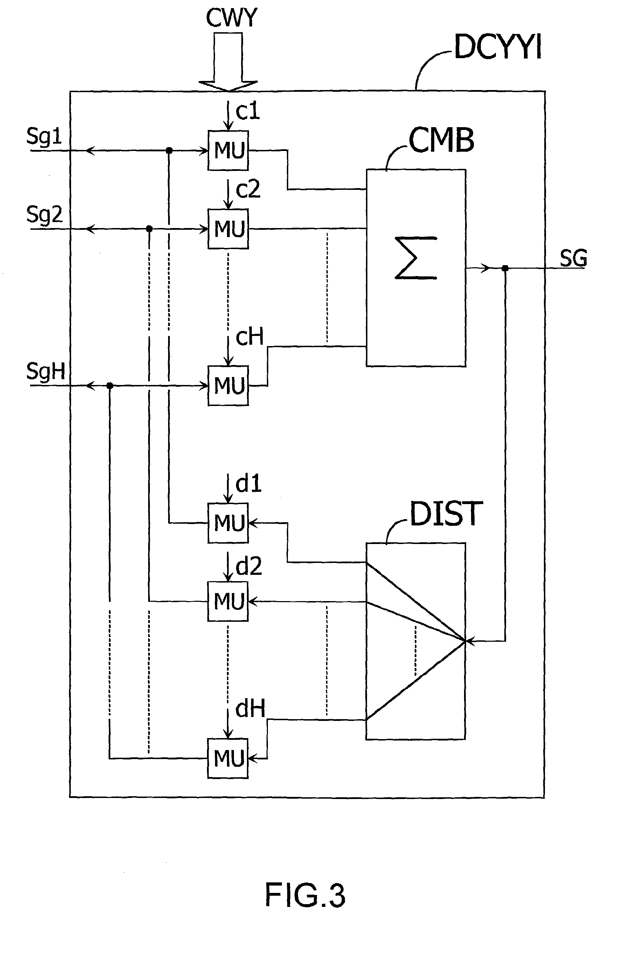

Fig.3 is a functional diagram which depicts combination means DCYY1, which may be part of either the first or second combination means (DCCI1...DCECM), (DCCO1...DCCOM), or of the first or second optional combination means (DCEI1...DCEIM), (DCSO1...DCSOP).

These combination means DCYY1 include multipliers MU and a combiner CMB intended to receive multiple input signals Sg1, Sg2,... SgH and to deliver a composite signal SG constituted by a linear combination of said input signals, which can be wrtitten as SG=c1.Sg1+c2.Sg2+...cH.SgH, where c1, c2,...cH are coefficients whose values are determined by a control word CWY. The combination means DCYY1 further include distribution means DIST intended to receive an input signal SG and to provide multiple output signals Sg1, Sg2,...SgH, through multipliers MU, so that said output signals may be expressed as d1.SG, d2.SG,...dH.SG, respectively, where d1, d2,... dH are coefficients whose values are determined by the control word CWY. The distribution means DIST associated to the combination means DCYY1 thus provide a reverse path for said combination means.

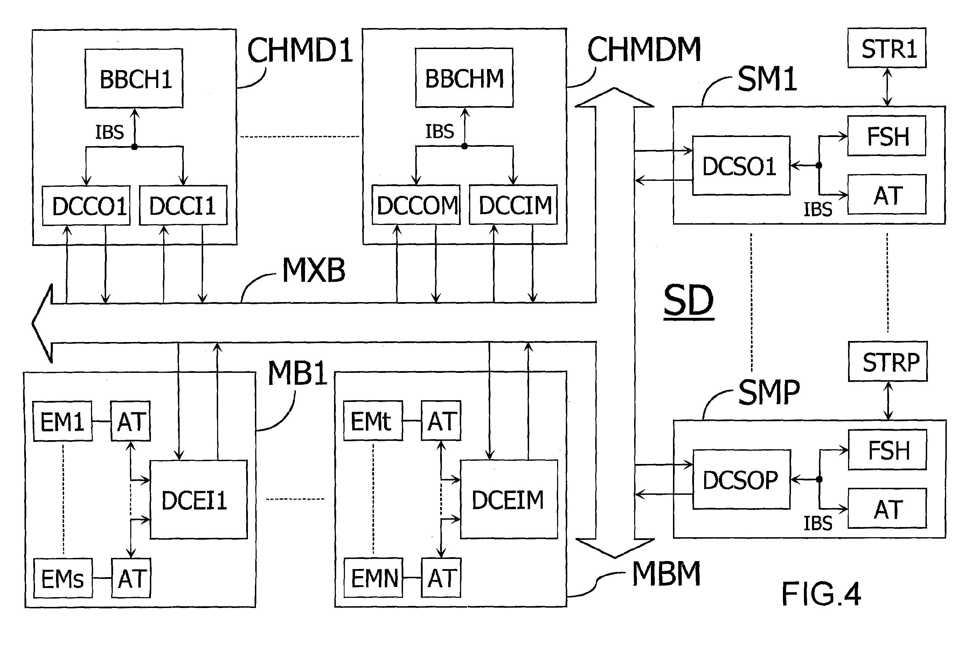

Fig.4 diagrammatically shows a simulation device SD acccording to a preferred embodiment of the invention. This simulation device SD includes a single multiplexed bus MXB intended to communicate with modem blocks MB1...MBM, each modem block including a plurality of modems (EM1...EMs),... (EMt...EMN) included in the signal transmitting and receiving means described above. Each modem block includes first optional combination means DCEI1...DCEIM, each being intended to combine output signals delivered by the variupus modems included in the relevant modem block.

The multiplexed bus MXB is also intended to communicate with multiple channel emulating modules CHMD1...CHMDM. Each channel emulating module CHMDk (for k=1 to M) includes:
. channel processing means BBCHk,
. first combination means DCCIk for combining together signals intended to be provided to said multiplexed bus, and
. second combination means DCCOk for combining together signals intended to be delivered by said multiplexed bus,
said means being able to exchange signals within said channel emulating module CHMDk by means of internal busses IBS.

The simulation device SD further includes combining modules SM1,...SMP including second optional combination means DCSO1,...DCSOP, frequency conversion means FSH and tunable attenuation means AT, said means being able to exchange signals within each combining module SM1,...SMP by means of other internal busses IBS. Each combining module SM1,...SMP is intended to deliver signals to or to receive signals from specific transceivers STR1...STRP.

The operation of the combination means (DCE11...DCEIM), (DCSO1...DCSOP), (DCCI1...DCECM), (DCCO1...DCCOM), of the channel processing means BBCHk, of the frequency conversion means FSH and of the tunable attenuation means AT has been described above and will not be described again here.

This embodiment of the invention is advantageous in that it enables to build the simulation device in a modular form. Each channel emulating module CHMDk may be implemented in the form of a printed circuit board or of a single integrated circuit and is physically independent from the other modules. The simulation device SD may thus easily be scaled according to the needs of a user of said device, which needs may for example vary with the number of specific transceivers to be tested or with the number of other transceivers to be emulated. The simulation device SD will thus feature a bulk and a cost, which are scalable and may only depend on expressed needs of the user of said device, and will in any case be significantly reduced with respect to those of known test devices.

## Claims

1. A device for simulating operating conditions of at least one specific transceiver intended to communicate with at least two other transceivers, which device includes signal transmitting and receiving means for emulating digital signals representative of stimuli intended to be exchanged between said specific transceiver and said other transceivers,
which device further includes multiplexing means for gathering and multiplexing digital signals representative of the stimuli to be exchanged between the transceivers, and for transmitting said signals in series on at least one multiplexed bus located between said transceivers.

2. A device as claimed in claim 1, further including signal combination means for combining together various digital signals intended to be carried by the multiplexed bus.

3. A device as claimed in claim 2, in which the combination means include:
. first combination means for combining together signals intended to be provided to said multiplexed bus, and
. second combination means for combining together signals intended to be delivered by said multiplexed bus.

4. A device as claimed in claims 2 or 3, in which distribution means are associated to said combination means, said distribution means being intended to provide a reverse path to the combination means.

5. A device as claimed in claims 1 to 4, further including channel processing means for modelling adverse effects each channel through which a given transceiver communicates with said specific transceiver will produce on stimuli transmitted through said channel, and for emulating said adverse effects by means of a tunable processing of digital signals intended to be carried by the multiplexed bus.

6. A device as claimed in any one of claims 1 to 5, further including frequency conversion means for shifting at least one frequency of at least one digital signal intended to be carried by the multiplexed bus.

7. A device as claimed in any one of claims 1 to 6, further including tunable attenuation means for tuning at least one amplitude value of at least one digital signal intended to be carried by the multiplexed bus.

8. A device as claimed in any one of claims 1 to 7, in which the signal transmitting and receiving means include multiple modems, each modem being intended to emulate a given other transceiver by transmitting and receiving digital signals representative of stimuli intended to be exchanged between said given transceiver and the specific transceiver.

9. A device as claimed in claims 1 to 8, including a single multiplexed bus intended to communicate with the signal tranmitting and receiving means, said multiplexed bus also being intended to communicate with multiple channel emulating modules, each channel emulating module including signal combination means, channel processing means, frequency conversion means and tunable attenuation means, said means being able to exchange signals within said channel emulating module.

10. A method for simulating operating conditions of at least one specific transceiver intended to communicate with at least two other transceivers, which method includes signal transmitting and receiving steps for emulating digital signals representative of stimuli intended to be exchanged between said specific transceiver and said other transceivers,
which method further includes a multiplexing step for gathering and multiplexing digital signals representative of the stimuli to be exchanged between the transceivers, and for transmitting said signals in series on at least one multiplexed bus located between said transceivers.
